# EUROPEAN PATENT SPECIFICATION

(11) **EP 3 476 907 B1**
(45) Date of publication and mention of the grant of the patent: **24.11.2021**
(21) Application number: 17198090.7
(22) Date of filing: 24.10.2017
(51) Int. Cl.: C09D 11/328, C09D 11/36, C09D 11/40

(54) **INK COMPOSITION FOR SECURITY DOCUMENT PERSONALIZATION**
TINTENZUSAMMENSETZUNG ZUR SICHERHEITSDOKUMENTPERSONALISIERUNG
COMPOSITION D'ENCRE POUR LA PERSONNALISATION DE DOCUMENTS DE SÉCURITÉ

(43) Date of publication of application: 01.05.2019
(73) Proprietor: Polska Wytwórnia Papierów Wartosciowych S.A., 00-222 Warszawa (PL)
(72) Inventor: Karpinski, Arkadiusz, 03-766 Warszawa (PL); Wójcik, Pawel, 03-185 Warszawa (PL); Biernacki, Ariel, 03-193 Warszawa (PL); Wojciechowska, Agata, 02-791 Warszawa (PL)
(74) Representative: Marcinska-Porzuc, Aleksandra

(56) References cited:
- EP-A1- 2 942 378
- EP-A1- 3 190 160
- WO-A1-2008/136795
- US-A1- 2008 119 593

## Description

### Field of the Invention

The subject matter of the invention is an ink jet composition, a security and/or valuable document comprising a personalized element and a personalized element made with an ink jet composition, as well as a method for manufacturing an ink jet composition that makes it possible to personalize the security and/or valuable document.

### State of the Art

Ink jet printing is a known technique, by which printing process is performed without any contact between a printing apparatus and a substrate onto which a picture, graphics, codes, or personal data is printed.

Ink jet compositions are known in the art for personalizing security and/or valuable documents. For example, an ink jet composition is known for ink printing, that comprises at least one component absorbing in near infrared, gamma-butyrolactone and 2-butoxyethyl acetate as a solvent, and a binder based on a vinyl chloride vinyl acetate copolymer. A picture applied, using the above mentioned composition, onto a substrate of a security and/or valuable document is invisible for the human eye, and exhibits the maximum absorption in the wavelength range from 700 to 950 nm.

The document EP 2 942 378 A1 describes infrared-absorbing ink jet ink composition for security document personalization. However, this solution is different than said invention.

### Summary of the invention

The aim of the present invention is to provide such an ink jet composition that would make it possible to produce a monochromatic or colorful personalization of a security and/or valuable document on a substrate from polycarbonate, polyvinyl chloride, polyester or derivatives thereof, the personalization being visible in the visible light range under any observation angle, that is resistant to high temperatures, guarantees high resistance to delamination the structure of the security and/or valuable document and is resistant to fading. Moreover, the aim of the invention is to provide a method for manufacturing an ink jet composition, as well as a security and/or valuable document itself comprising personalized elements made with an ink jet composition according to the invention.

These aims are achieved with an ink jet composition, a security and/or valuable document comprising an ink jet composition, a personalized element and a method for manufacturing an ink jet composition according to independent claims.

An ink jet composition, according to the invention, is intended for personalizing security and/or valuable documents. The solution is based on developing an ink jet composition from a set of CMYK colors: C- Cyan, M- Magenta, Y- Yellow, and K- Black, that is fully compatible with printing on a substrate made from polycarbonate, polyvinyl chloride, and polyester, and derivatives thereof. The system is based on replacing the color Magenta with the color red, whereby such an arrangement of colors models the body colors (i.e., the colors present normally on a human face) more naturally. The present solution is based on using specific proportions of: dyes for solvent systems, organic solvents, and a binder. Dyes used for producing CMYK ink jet inks are used separately or as a mixture of dyes.

A security and/or valuable document comprising personalized elements is composed of a substrate and any number of layers. Preferably, the substrate is a layer of polycarbonate, polyvinyl chloride, or polyester, as well as derivatives thereof in various combinations. Other layers of the document are non-transparent or transparent foils of polycarbonate, polyvinyl chloride, or polyester, as well as derivatives thereof, and the amount of them depends on the applied security features and graphics. The ink jet composition is applied onto the substrate, preferably onto a foil, for example, a white or a transparent one. If a monochromatic personalized element is to be produced, the substrate color becomes the color of the personalized element. Similarly, the substrate color, in the case of a multicolor personalized element, may be one of the colors of the personalized element. After having applied the ink jet composition constituting the personalized element and after having applied additional security features that are not the subject matter of the invention, a transparent protective layer is applied. The layers forming the security and/or valuable document are applied at room temperature, and then, they are subjected to a binding process at a temperature from 130 do 210°C, preferably from 140 do 200°C. The substrate comprising the personalized element is laminated along with other layers of the security and/or valuable document. After the binding process, the personalized elements constitute a built-in and a tamper-proof layer within the structure of the security and/or valuable document. The layers of the document may be joined with the substrate also by laminating, welding, gluing, fusing. The ink jet inks developed for this purpose are resistant to high temperatures that occur during the laminating, welding, gluing, or fusing process, and guarantee high resistance to delamination the combined structure of the document and possess predicted light resistance for at least 10 years of using.

The subject matter of the invention is a new ink jet composition comprising:
- at least one dye selected from: Solvent Red 160, Solvent Red 89, Solvent Red 92, Solvent Blue 44. Solvent Blue 70, Solvent Yellow 56, Solvent Yellow 82, Solvent Yellow 83:1, Solvent Yellow 179, Disperse Yellow 201, Solvent Black 3, Solvent Black 29, Solvent Black 45;
- a mixture of organic solvents, selected from: gamma-butyrolactone with dipropylene glycol dimethyl ether, or gamma-butyrolactone with 2-butoxyethyl acetate;
- a binder constituted by a thermoplastic resin being a copolymer of 85% by weight of vinyl chloride and 15% by weight of vinyl acetate or a copolymer of vinyl chloride and vinyl isobutyl ether.

Preferably, the composition contains the dye in an amount of 0.5-6% w/w, and the binder in an amount of 0.5-4% w/w. The binder is a copolymer of vinyl chloride and vinyl acetate of a molecular weight M_{w} from 40 000 to 80 000, preferably 50 000, or the binder is a vinyl chloride/ vinyl isobutyl ether copolymer of a molecular weight M_{w} from 8 000 to 10 000, preferably 9 000.

Preferably, the composition contains gamma-butyrolactone in an amount of 5-30% w/w, dipropylene glycol dimethyl ether in an amount of 60-95% w/w, 2-butoxyethyl acetate in an amount of 60-95% w/w.

Preferably, the viscosity is 3-8 cP and the surface tension is 26 - 30 mN/m. Moreover, the composition is resistant to laminating at temperatures to 210°C, also at higher pressures.

Also, the subject matter of the invention is a personalized element made using at least one ink jet composition as defined above. Moreover, the personalized element may be a photograph, an alphanumeric character, a microtext, a line, a geometrical shape, a geometrical form, a figure, a letter, a picture, or a combination thereof.

Also, the subject matter of the invention is a security and/or valuable document, in which, after the lamination process, personalized elements as defined above, create a built-in layer within the structure of the laminated document and contain the defined ink jet composition. In the document, the substrate is polycarbonate, polyvinyl chloride, or polyester, as well as derivatives and combinations thereof.

The subject matter of the invention is a method for manufacturing an ink jet composition as defined above, comprising the steps of:
a) homogenizing ink jet components using mixing devices,
b) mixing solvents with a binder at room temperature until complete dissolving,
c) adding, to the produced mixture, at least one dye and mixing for 1 hour,
d) purifying the produced ink jet composition by filtering with polypropylene filters of porosity of 0.3 µm,
e) inserting the ink jet composition into cartridges to avoid any contact with the air.

Advantages of the invention:
- The use of: dyes (instead of pigments), a resin being the copolymer constituting 85% by weight of vinyl chloride and 15% by weight of vinyl acetate and organic solvents. Using a vinyl chloride/ vinyl isobutyl ether copolymer.
- The possibility of using this ink jet ink for printing a colorful personalization onto a polycarbonate substrate that is laminated.
- An advantage of this solution is the effect of printing colorful personalization of, for example, a polycarbonate document obtaining, at the same time, the resistance of the document to delamination and the resistance of the personalized element to fading.

Below, embodiments are presented of an ink jet composition, of a security and/or valuable document comprising an element personalized using the ink jet composition, and the personalized element itself according to the invention, and a method for manufacturing an ink jet composition containing at least one dye and an organic solvent that is either gamma-butyrolactone with dipropylene glycol dimethyl ether or gamma-butyrolactone with 2-butoxyethyl acetate, and a binder. By applying the ink jet composition onto the substrate of a security and/or valuable document, one can obtain monochromatic or colorful personalized elements that are resistant to high temperatures occurring during the laminating, welding, gluing, or fusing process, and after the binding process, the ink jet composition is light resistant and durable in use for at least 10 years. However, it should be stressed that the described examples in no way are intended to limit the scope of the protection and are given merely to illustrate one of many possible applications of the present invention. The present invention is applicable everywhere where one needs to personalize - either colorful or monochromatic security and/or valuable documents on a substrate made from polycarbonate, polyvinyl chloride, or polyester, and derivatives thereof, that is, subsequently, subjected to a process of binding at high temperatures, also at higher pressures.

### Detailed description

In one embodiment, a security and/or valuable document has a form and a format of a card, such as for example, identity cards. In alternative embodiments, the function of the security and/or valuable document may be performed by another data carrier, e.g., chip cards, smart cards, personal documents, passports, driving licenses, tickets, as well as other security and/or valuable documents and data carriers being media for safe information storage.

A substrate and a coating layer in the sense of the present invention is a layer that consists of polycarbonate, polyvinyl chloride, or polyester, and derivations and combinations thereof.

A security and/or valuable document according to the invention has various security features. The security features are elements that increase the protection against counterfeiting of the security and/or valuable document such as personalized elements in a form of a photograph or the data of the owner of the security and/or valuable document. Also, a personalized element may be constituted by any shape: an alphanumeric character, a microtext, a line, a geometrical shape, a geometrical form, a figure, a letter, a picture, or a combination thereof. A personalized element may extend over the entire surface or only on a part of the surface of the security and/or valuable document.

Moreover, the security and/or valuable document may also comprise electronic components such as an RFID transponder, chip modules, antennas for dual-interface modules, or hologram elements. The visual evaluation is performed by the human eye.

The terms, used above as well as in the following specification and the patent claims, have the meaning as follows:
**Ink or ink jet composition,** used interchangeably - coloring agent in a form of a dye solution in a solvent, optionally with addition of thickening agents, for example, a binder.
**Dye** - a chemical compound being a substance transmitting light and coloring the medium it is dissolved or melted within. Also, it may react with this medium.
**Main solvent** - dipropylene glycol dimethyl ether for a fast drying ink; 2-butoxyethyl acetate for a slow drying ink.
**Co-solvent** - gamma-butyrolactone; assures good solubility of all the ink components.
**Slow drying ink** - needs using heaters that perform end drying of elements printed on a substrate.
**Fast drying ink** - does not need the end drying process.
**Room temperature** - according to the invention, denotes the range from 20°C to 25°C.
**Binding process** - merging the document structure under the influence of high temperature and pressure, for example, by laminating, welding, gluing, fusing.

The invention is illustrated by the following embodiments that, however, do not limit its scope.

### Example 1

**Table 1. Origin and nomenclature of solvent dyes:**

| Vendor | Product name | Color Index |
|---|---|---|
| BASF | Orasol Red 365 | Solvent Red 160 |
| | Orasol Blue 855 | Solvent Blue 70 |
| | Orasol Yellow 157 | Solvent Yellow 82 |
| | Orasol Black X55 | Solvent Black 29 |
| Clariant | Savinyl Black RLSN | Solvent Black 45 |
| | Savinyl Blue GLS | Solvent Blue 44. |
| | Savinyl Yellow RLS | Solvent Yellow 83:1 |
| Keystone | Keyfast Spirit Black KR | Solvent Black 29 |
| | Oil Nubian Black BT | Solvent Black 3 |
| | Keyplast Blue 6G-SS Micro | Solvent Blue 70 |
| | Keyfast Spirit Fire Red GLS | Solvent Red 89 |
| | Keyfast Spirit Yellow 2GN | Solvent Yellow 82 |
| Boruta-Zachem | Spirit yellow G | Solvent Yellow 56 |
| | Spirit red R | Solvent Red 92 |
| Lanxess | Macrolex Yellow 6G | Solvent Yellow 179 |
| | | Disperse Yellow 201 |

**Table 2. Origin and properties of resin - binders:**

| Vendor | Product name | Chemical nature | Molecular weight |
|---|---|---|---|
| BASF | LAROFLEX MP15 | Vinyl chloride/ vinyl isobutyl ether copolymer | 9 000 |
| Wacker - Chemie | Vinnol E15/45 TF | Polyvinyl chloride-acetate without functional groups | 45 000 - 55 000 |
| Wacker - Chemie | Vinnol E15/45 MTF | Polyvinyl chloride-acetate with carboxyl groups | 50 000 - 60 000 |
| Wacker - Chemie | Vinnol E15/48A | Polyvinyl chloride-acetate with hydroxyl groups | 60 000 - 80 000 |

**Table 3. Exemplary ink jet compositions in % by weight:**

| Component | Ink 1 | Ink 2 | Ink 3 | Ink 4 | Ink 5 | Ink 6 | Ink 7 | Ink 8 | Ink 9 |
|---|---|---|---|---|---|---|---|---|---|
| Savinyl Blue GLS | 2 | - | - | - | - | - | - | - | |
| Orasol Blue 855 | - | 2 | - | - | - | - | - | - | |
| Orasol Red 365 | - | - | 2 | - | - | - | - | - | 0.5 |
| Savinyl Yellow RLS | - | - | - | 2 | - | - | - | - | |
| Orasol Yellow 157 | - | - | - | - | 2 | - | - | - | 0.5 |
| Keyfast Spirit Yellow 2GN | - | - | - | - | - | 2 | - | - | - |
| Macrolex Yellow 6G | - | - | - | - | - | - | 2 | - | - |
| Savinyl Black RLSN | - | - | - | - | - | - | - | 3 | - |
| DPGDME | 75.25 | - | 75.25 | 75.25 | - | - | - | - | - |
| EGBEA | - | 76.35 | - | - | 76.2 | 74.6 | 76.2 | 75.2 | 77.2 |
| gamma- Butyrolactone | 20 | 20 | 20 | 20 | 20 | 20 | 20 | 20 | 20 |
| Vinnol E15/45 TF | 2.75 | - | 2.75 | 2.75 | - | - | 1.8 | 1.8 | 1.8 |
| Vinnol E15/48 A | - | 1.65 | - | - | - | - | 0 | 0 | - |
| Vinnol E15/45 MTF | - | - | - | - | 1.8 | - | 0 | 0 | - |
| Laroflex MP15 | - | - | - | - | - | 3.4 | - | - | - |
| Viscosity (20°C, cP) | 4.28 | 4.54 | 4.25 | 4.27 | 4.53 | 4.48 | 4.46 | 4.77 | 4.33 |
| Surface tension (mN/m) | 26.3 | 27.2 | 26.4 | 27.3 | 29.1 | 27.2 | 28.5 | 28.0 | 27.3 |

| | | | | | | | | | |
|---|---|---|---|---|---|---|---|---|---|
| EGBEA - 2-butoxyethyl acetate DPGDME - dipropylene glycol dimethyl ether | | | | | | | | | |

**Table 4. Summary of tests for exemplary ink jet inks:**

| Test | Ink 1 | Ink 2 | Ink 3 | Ink 4 | Ink 5 | Ink 6 | Ink 7 | Ink 8 | Ink 9 |
|---|---|---|---|---|---|---|---|---|---|
| Resistance to fading under the lamination /binding conditions | yes | yes | yes | yes | yes | yes | yes | yes | yes |
| Color of prints after the lamination/bin ding process in L,a,b | L=67, a=-28. | L=64. a=-37, | L=48. a=51, | L=75, a=3, | L=75, a=4. | L=75, a=4. | L=82, a=-14. | L=17, a=6, | L=61, a=24. |
| | b=-12 | b=-16 | b=8 | b=70 | b=78 | b=76 | b=79 | b=-4 | b=24 |
| Conductivity | 12.0 µS | 11.0 µS | 27.4 µS | 20.3 µS | 7.4 µS | 6.5 µS | 0.25 µS | 170.8 µS | 8.3 µS |
| Contamination by chloride ions | 0 ppm | 0 ppm | 0 ppm | 0 ppm | 0 ppm | 0 ppm | 0 ppm | 0 ppm | 0 ppm |

| Light resistance | ΔE=3.5 | ΔE=2.5 | ΔE=6.0 | ΔE=1.0 | ΔE=1.8 | ΔE=1.5 | ΔE=0.3 | ΔE=2.0 | ΔE=2.1 |
|---|---|---|---|---|---|---|---|---|---|
| Resistance to delamination | yes | Yes | yes | yes | yes | yes | yes | yes | yes |
| Drying rate | fast | slow | fast | fast | slow | slow | slow | slow | slow |

### Test procedure:

1. The ink jet inks have been printed using a printhead Epson DX5.
2. The viscosity has been measured by means of viscometer Brookfield LVDV2T CP (spindle CPA - 41Z) at a temperature of 20°C and expressed in centipoise (cP).
3. The surface tension has been measured by means of a bubble pressure tensiometer Kruss PB50 and expressed in milinewton divided by meter (mN/m).
4. The resistance of ink jet inks to fading under high temperature and pressure during the binding process of the document structure has been evaluated by means of a spectrophotometer (SpectroEye LT, standard illuminant - D50, observation angle - 2°, white pattern - absolute, physical filter - polarizing). Resistance has been evaluated as "yes", if the dye has not been degraded under the temperature of the binding process and has preserved its color properties. The resistance to fading has been evaluated as "no", if the dye has been degraded under the temperature of the binding process and has lost its color properties. The color of printouts after the binding process has been expressed in the color space of L,a,b.
5. The ink jet ink conductivity has been measured by means of a conductivity meter equipped with platinum electrodes and expressed in microsiemens (µS). High conductivity of the ink jet ink is an undesirable effect related to a risk of fast corrosion of a piezo-type Drop-on-Demand printhead. Moreover, high conductivity of the ink jet ink has an adverse influence if the substrate tends to accumulate electrostatic charge. The symptom of this is a decrease of the printing quality, resulting from the fact that droplets of the conductive ink jet ink are attracted to the location on the substrate, where the charge is accumulating.
6. The measurement of the pollution of dyes by chloride ions has been performed by means of an ion-selective chloride electrode and a chloride-silver reference electrode. The measurement has been performed in an aqueous solution in which the dyes have been vortex-mixed. The contamination level by chloride ions has been expressed in "ppm" units (parts per million).
7. The light resistance has been investigated by means of a device for accelerated aging tests simulating 10 years of using. After the aging tests, the changes of the color scheme have been measured with a spectrophotometer and expressed by a parameter ΔE (for the color space L,a,b).
8. The resistance to delamination has been measured by means of a Zwick Roell device. The resistance has been evaluated as "yes" if it was impossible to delaminate physically the top polycarbonate layer, for example, a transparent polycarbonate foil of a thickness of 100 µm, that covers the printed element.

### Preparation of ink jet inks:

Ink jet inks have been prepared by homogenizing and dissolving all the components using mixing devices. The main solvent (dipropylene glycol dimethyl ether or 2-butoxyethyl acetate ) and the co-solvent (gamma-butyrolactone) has been mixed with the resin at room temperature (20-25°C) until the complete dissolution of the latter. A dye or dye mixture has been added to the mixture and mixing was continued further for 1 hour. The ink jet inks have been purified from dissoluble contaminants by filtering with polypropylene Pall Profile 2 filters of a porosity of 0.3 µm. Next, the ink jet inks have been placed in cartridges to avoid any contact with the air.

### Exemplary compositions not limiting the invention:

**1.** An ink jet composition comprising:
   - Savinyl Blue GLS in an amount of 2%
   - dipropylene glycol dimethyl ether in an amount of 75.25 %
   - gamma-butyrolactone in an amount of 20%
   - Vinnol E15/45 TF in an amount of 2.75%
   This composition is characterized by a viscosity of 4.28 cP and a surface tension of 26.3 mN/m.
**2.** An ink jet composition comprising:
   - Orasol Blue 855 in an amount of 2%
   - 2-butoxyethyl acetate in an amount of 76.35 %
   - gamma-butyrolactone in an amount of 20%
   - Vinnol E15/48 A in an amount of 1.65%
   This composition is characterized by a viscosity of 4.54 cP and a surface tension of 27.2 mN/m.
**3.** An ink jet composition comprising:
   - Orasol Red 365 in an amount of 2%
   - dipropylene glycol dimethyl ether in an amount of 75.25 %
   - gamma-butyrolactone in an amount of 20%
   - Vinnol E15/45 TF in an amount of 2.75%
   This composition is characterized by a viscosity of 4.25 cP and a surface tension of 26.4 mN/m.
**4.** An ink jet composition comprising:
   - Savinyl Yellow RLS in an amount of 2%
   - dipropylene glycol dimethyl ether in an amount of 75.25 %
   - gamma-butyrolactone in an amount of 20%
   - Vinnol E15/45 TF in an amount of 2.75%
   This composition is characterized by a viscosity of 4.27 cP and a surface tension of 27.3 mN/m.
**5.** An ink jet composition comprising:
   - Orasol Yellow 157 in an amount of 2%
   - 2-butoxyethyl acetate in an amount of 76.2 %
   - gamma-butyrolactone in an amount of 20%
   - Vinnol E15/45 MTF in an amount of 1.8%
   This composition is characterized by a viscosity of 4.53 cP and a surface tension of 29.1 mN/m.
**6.** An ink jet composition comprising:
   - Keyfast Spirit Yellow 2GN in an amount of 2%
   - 2-butoxyethyl acetate in an amount of 74.6 %
   - gamma-butyrolactone in an amount of 20%
   - Laroflex MP15 in an amount of 3.4%
   This composition is characterized by a viscosity of 4.48 cP and a surface tension of 27.2 mN/m.
**7.** An ink jet composition comprising:
   - Macrolex Yellow 6G in an amount of 2%
   - 2-butoxyethyl acetate in an amount of 76.2 %
   - gamma-butyrolactone in an amount of 20%
   - Vinnol E15/45 TF in an amount of 1.8%
   This composition is characterized by a viscosity of 4.46 cP and a surface tension of 28.5 mN/m.
**8.** An ink jet composition comprising:
   - Savinyl black RLSN in an amount of 3%
   - 2-butoxyethyl acetate in an amount of 75.2 %
   - gamma-butyrolactone in an amount of 20%
   - Vinnol E15/45 TF in an amount of 1.8%
   This composition is characterized by a viscosity of 4.77 cP and a surface tension of 28.0 mN/m.
**9.** An ink jet composition (color orange) comprising:
   - Orasol Red 365 in an amount of 0.5%
   - Orasol Yellow 157 in an amount of 0.5%
   - 2-butoxyethyl acetate in an amount of 77.2 %
   - gamma-butyrolactone in an amount of 20%
   - Vinnol E15/45 TF in an amount of 1.8%
   This composition is characterized by a viscosity of 4.33 cP and a surface tension of 27.3 mN/m.

According to an embodiment of the invention, a security and/or valuable document comprises a substrate made from a plastic material such as polycarbonate (PC), polyvinyl chloride, or polyester. The substrate may be composed of a transparent foil, a white foil or a combination of transparent and white foils. Also, the substrate in the sense of this invention may be a paper layer laminated with PC or PCV foils. Onto the substrate, a layer of the composition according to the invention is applied. It may be printed using the ink jet technique. Preferably, at least one coating layer is applied onto the composition layer. The coating layer may have various thicknesses ranging from 30 to 300 µm or it may be a combination of foils of various thicknesses. This layer may be constituted by a foil, preferably a transparent elastic foil from a plastic material, or another layer from a plastic material, for example from polycarbonate (PC), polyvinyl chloride, or polyester. The security and/or valuable document according to the present embodiment is created from a stack of layers and may be composed of at least one coating layer placed either on one side or on both sides of the substrate. Also, the security and/or valuable document may be composed, for example, of a coating layer, a subsequent coating layer, then a substrate, a composition layer, and subsequent coating layers. Then, the structure arranged in this manner is subjected to a binding process, in particular a lamination process.

## Claims

1. An ink jet composition comprising:
- at least one dye selected from: Solvent Red 160, Solvent Red 89, Solvent Red 92, Solvent Blue 44. Solvent Blue 70, Solvent Yellow 56, Solvent Yellow 82, Solvent Yellow 83:1, Solvent Yellow 179, Disperse Yellow 201, Solvent Black 3, Solvent Black 29, Solvent Black 45;
- a mixture of organic solvents selected from: gamma-butyrolactone with dipropylene glycol dimethyl ether, or gamma-Butyrolactone with 2-butoxyethyl acetate;
- a binder that is a thermoplastic resin being a copolymer of 85% by weight of vinyl chloride and 15% by weight of vinyl acetate or a copolymer of vinyl chloride and vinyl isobutyl ether.

2. An ink jet composition according to claim 1, wherein the dye is in an amount of 0.5-6% w/w.

3. An ink jet composition according to claim 1, wherein gamma-butyrolactone is in an amount of 5-30% w/w, dipropylene glycol dimethyl ether is in an amount of 60-95% w/w, 2-butoxyethyl acetate is in an amount of 60-95% w/w.

4. An ink jet composition according to claim 1, wherein the binder is in an amount of 0.5-4% w/w.

5. An ink jet composition according to claim 1, wherein the copolymer of vinyl chloride and vinyl acetate has a molecular weight M_{w} from 40 000 to 80 000, preferably 50 000.

6. An ink jet composition according to claim 1, wherein the copolymer of vinyl chloride and vinyl isobutyl ether has a molecular weight M_{w} from 8 000 to 10 000, preferably 9 000.

7. An ink jet composition according to claim 1, wherein its viscosity is of 3-8 cP and the surface tension is of 26 - 30 mN/m.

8. A security and/or valuable document comprising a personalized element made with an ink jet composition according to claims 1-7, composed of a substrate and any number of layers, wherein the personalized elements constitute a built-in layer within the structure of the security and/or valuable document.

9. A security and/or valuable document according to claim 8, wherein the layers forming the security and/or valuable document are applied at room temperature, and then, they are subjected to a binding process at a temperature from 130 to 210°C.

10. A security and/or valuable document according to claim 9, wherein the binding process includes laminating, welding, gluing or fusing.

11. A security and/or valuable document according to any claims 9 or 10, wherein during the binding process the substrate comprising the personalized element is laminated along with other layers of the security and/or valuable document.

12. A security and/or valuable document according to any of claims 8-11, wherein the personalized element comprises a photograph, an alphanumeric character, a microtext, a line, a geometrical shape, a geometrical form, a figure, a letter, a picture, or a combination thereof.

13. A security and/or valuable document according to any of claims 8-12, wherein the substrate is a layer of a polycarbonate, polyvinyl chloride or polyester, or derivatives and combinations thereof.

14. A security and/or valuable document according to any of claims 8-13, wherein the other layers of the document are non-transparent or transparent foils of polycarbonate, polyvinyl chloride, or polyester, as well as derivatives thereof.

15. A method for manufacturing an ink jet composition according to one of claims 1-7 comprising the steps of:
a) homogenizing ink jet components using mixing devices,
b) mixing solvents with a binder at room temperature until complete dissolving,
c) adding, to the produced mixture, at least one dye and mixing for 1 hour,
d) purifying the produced ink jet composition by filtering with polypropylene filters of porosity of 0.3 µm,
e) inserting the ink jet composition into cartridges to avoid any contact with the air.

## Patentansprüche

1. Tintenstrahlzusammensetzung, umfassend:
- zumindest ein Färbemittel, das ausgewählt ist aus: Solvent Red 160, Solvent Red 89, Solvent Red 92, Solvent Blue 44, Solvent Blue 70, Solvent Yellow 56, Solvent Yellow 82, Solvent Yellow 83:1, Solvent Yellow 179, Disperse Yellow 201, Solvent Black 3, Solvent Black 29, Solvent Black 45;
- eine Mischung aus organischen Lösungsmitteln, ausgewählt aus: Gamma-Butyrolacton mit Dipropylenglykoldimethylether oder Gamma-Butyrolacton mit 2-Butoxylethylacetat;
- ein Bindemittel, das ein Thermoplastharz ist, welches ein Copolymer aus 85 Gew.-% Vinylchlorid und 15 Gew.-% Vinylacetat oder ein Copolymer aus Vinylchlorid und Vinylisobutylether ist.

2. Tintenstrahlzusammensetzung nach Anspruch 1, wobei das Färbemittel in einer Menge von 0,5-6 % w/w vorliegt.

3. Tintenstrahlzusammensetzung nach Anspruch 1, wobei Gamma-Butyrolacton in einer Menge von 5-30 % w/w vorliegt, Dipropylenglykoldimethylether in einer Menge von 60-95 % w/w vorliegt, 2-Butoxylethylacetat in einer Menge von 60-95 % w/w vorliegt.

4. Tintenstrahlzusammensetzung nach Anspruch 1, wobei das Bindemittel in einer Menge von 0,5-4 % w/w vorliegt.

5. Tintenstrahlzusammensetzung nach Anspruch 1, wobei das Copolymer aus Vinylchlorid und Vinylacetat ein Molekulargewicht M_{w} von 40 000 bis 80 000, vorzugsweise 50 000, aufweist.

6. Tintenstrahlzusammensetzung nach Anspruch 1, wobei das Copolymer aus Vinylchlorid und Vinylisobutyl ein Molekulargewicht M_{w} von 8 000 bis 10 000, vorzugsweise 9 000, aufweist.

7. Tintenstrahlzusammensetzung nach Anspruch 1, wobei ihre Viskosität 3-8 cP beträgt und die Oberflächenspannung 26 - 30 mN/m beträgt.

8. Sicherheits- und/oder Wertdokument, umfassend ein personalisiertes Element, das mit der Tintenstrahlzusammensetzung nach Anspruch 1 bis 7 hergestellt ist, zusammengesetzt aus einem Substrat und jeglicher Anzahl von Schichten, wobei die personalisierten Elemente eine eingebaute Schicht innerhalb der Struktur des Sicherheits- und/oder Wertdokuments bilden.

9. Sicherheits- und/oder Wertdokument nach Anspruch 8, wobei die Schichten, die das Sicherheits- und/oder Wertdokument ausbilden, auf Raumtemperatur aufgebracht und dann einem Bindeprozess bei einer Temperatur von 130 bis 210 °C unterzogen werden.

10. Sicherheits- und/oder Wertdokument nach Anspruch 9, wobei der Bindeprozess Laminieren, Schweißen, Kleben oder Aufschmelzen beinhaltet.

11. Sicherheits- und/oder Wertdokument nach einem der Ansprüche 9 oder 10, wobei das Substrat, das das personalisierte Element umfasst, während des Bindeprozesses zusammen mit anderen Schichten des Sicherheits- und/oder Wertdokuments laminiert wird.

12. Sicherheits- und/oder Wertdokument nach einem der Ansprüche 8 bis 11, wobei das personalisierte Element ein Lichtbild, ein alphanumerisches Zeichen, einen Mikrotext, eine Linie, eine geometrische Form, eine geometrische Ausbildung, eine Zahl, einen Buchstaben, ein Bild oder eine Kombination davon umfasst.

13. Sicherheits- und/oder Wertdokument nach einem der Ansprüche 8 bis 12, wobei das Substrat eine Schicht aus Polycarbonat, Polyvinylchlorid oder Polyester oder Derivaten und Kombinationen davon ist.

14. Sicherheits- und/oder Wertdokument nach einem der Ansprüche 8 bis 13, wobei die anderen Schichten des Dokuments nichttransparente oder transparente Folien aus Polycarbonat, Polyvinylchlorid oder Polyester sowie Derivaten davon sind.

15. Verfahren zum Herstellen einer Tintenstrahlzusammensetzung nach einem der Ansprüche 1 bis 7, die folgenden Schritte umfassend:
a) Homogenisieren von Tintenstrahlkomponenten unter Benutzung von Mischgeräten,
b) Mischen von Lösungsmitteln mit einem Bindemittel auf Raumtemperatur bis zur vollständigen Lösung,
c) Zugeben, zur hergestellten Mischung, von zumindest einem Färbemittel und Mischen für 1 Stunde,
d) Klären der hergestellten Tintenstrahlzusammensetzung durch Filtern mit Polypropylenfiltern mit einer Porigkeit von 0,3 µm,
e) Einführen der Tintenstrahlzusammensetzung in Patronen, um jeglichen Kontakt mit der Luft zu vermeiden.

## Revendications

1. Composition pour jet d'encre comprenant :
- au moins une teinture sélectionnée parmi : Solvent Red 160, Solvent Red 89, Solvent Red 92, Solvent Blue 44, Solvent Blue 70, Solvent Yellow 56, Solvent Yellow 82, Solvent Yellow 83:1, Solvent Yellow 179, Disperse Yellow 201, Solvent Black 3, Solvent Black 29, Solvent Black 45;
- un mélange de solvants organiques sélectionnés parmi les suivants : gamma-butyrolactone avec du dipropylène glycol diméthyle éther, ou du gamma-butyrolactone avec du 2-butoxyéthyle acétate;
- un liant qui est une résine thermoplastique étant un copolymère de 85 % en poids de chlorure de vinyle et 15 % en poids d'acétate de vinyle ou un copolymère de chlorure de vinyle et d'isobutyle éther de vinyle.

2. Composition pour jet d'encre selon la revendication 1, dans laquelle la teinture est présente en une quantité de 0,5 à 6 % en poids/poids.

3. Composition pour jet d'encre selon la revendication 1, dans laquelle le gamma-butyrolactone est présent en une quantité de 5 à 30 % en poids/poids, le dipropylène glycol diméthyle éther est présent en une quantité de 60 à 95 % en poids/poids, le 2-butoxyéthyle acétate est présent en une quantité de 60 à 95 % en poids/poids.

4. Composition pour jet d'encre selon la revendication 1, dans laquelle le liant est présent en une quantité de 0,5 à 4 % en poids/poids.

5. Composition pour jet d'encre selon la revendication 1, dans laquelle le copolymère de chlorure de vinyle et d'acétate de vinyle a un poids moléculaire M_{w} de 40 000 à 80 000, de préférence 50 000.

6. Composition pour jet d'encre selon la revendication 1, dans laquelle polymère de chlorure de vinyle et d'isobutyle éther de vinyle a un poids moléculaire M_{w} de 8 000 à 10 000, de préférence 9 000.

7. Composition pour jet d'encre selon la revendication 1, dans laquelle sa viscosité est de 3 à 8 cP et la tension superficielle est de 26 à 30 mN/m.

8. Document de sécurité et/ou de valeur comprenant un élément personnalisé réalisé avec une composition pour jet d'encre selon les revendications 1 à 7, composé d'un substrat et de tout nombre de couches, les éléments personnalisés constituant une couche intégrée dans la structure du document de sécurité et/ou de valeur.

9. Document de sécurité et/ou de valeur selon la revendication 8, dans lequel les couches formant le document de sécurité et/ou de valeur sont appliquées à température ambiante puis sont soumises à un processus d'alliage à une température de 130 à 210 °C.

10. Document de sécurité et/ou de valeur selon la revendication 9, dans lequel le processus de liage inclut un laminage, un soudage, un collage ou une fusion.

11. Document de sécurité et/ou de valeur selon l'une quelconque des revendications 9 ou 10, dans lequel, pendant le processus de liage, le substrat comprenant l'élément personnalisé est laminé en même temps que d'autres couches du document de sécurité et/ou de valeur.

12. Document de sécurité et/ou de valeur selon l'une quelconque des revendications 8 à 11, dans lequel l'élément personnalisé comprend une photographie, un caractère alphanumérique, un micro-texte, une ligne, une forme géométrique, une figure, une lettre, une image, ou leurs combinaisons.

13. Document de sécurité et/ou de valeur selon l'une quelconque des revendications 8 à 12, dans lequel le substrat est une couche de polycarbonate, de chlorure de polyvinyle ou de polyester, ou de leurs dérivés et combinaisons.

14. Document de sécurité et/ou de valeur selon l'une quelconque des revendications 8 à 13, dans lequel les autres couches du document sont des films non transparents ou transparents de polycarbonate, de chlorure de polyvinyle, ou de polyester, de même que leurs dérivés.

15. Procédé de fabrication d'une composition pour jet d'encre selon l'une quelconque des revendications 1 à 7, comprenant les étapes suivantes :
a) homogénéisation des composants pour jet d'encre en utilisant des dispositifs de mélange, ;
b) mélange de solvants avec un liant à température ambiante jusqu'à dissolution complète,
c) adjonction au mélange du produit d'au moins une teinture et mélange pendant une heure,
d) purification de la composition de jet d'encre produite par filtrage avec des filtres en polypropylène d'une porosité de 0,3 µm.
e) insertion de la composition pour jet d'encre dans des cartouches pour éviter tout contact avec l'air.
